(19) Europäisches Patentamt
European Patent Office
Office européen des brevets

(11) **EP 4 716 303 A1**

(12) **EUROPEAN PATENT APPLICATION**
published in accordance with Art. 153(4) EPC

(43) Date of publication:
**25.03.2026 Bulletin 2026/13**

(21) Application number: **23940071.6**

(22) Date of filing: **06.06.2023**

(51) International Patent Classification (IPC):
**H04W 36/08** (2009.01)

(52) Cooperative Patent Classification (CPC):
**H04W 36/08**

(86) International application number:
**PCT/CN2023/098713**

(87) International publication number:
**WO 2024/250181 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **WEI, Dongdong**
**Shenzhen, Guangdong 518129 (CN)**
• **WANG, Fan**
**Shenzhen, Guangdong 518129 (CN)**
• **TANG, Hao**
**Shenzhen, Guangdong 518129 (CN)**
• **ZHANG, Zhang**
**Shenzhen, Guangdong 518129 (CN)**
• **FENG, Qi**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **CELL RESELECTION METHOD AND APPARATUS**

(57)    A cell reselection method and an apparatus are provided. The method includes: obtaining a plurality of first parameters related to operating modes, where the operating mode is related to a transmission resource of a network device to which a first cell belongs and/or a function supported by the network device, and the first cell includes a serving cell of a terminal device and/or a neighboring cell of the serving cell; and performing cell reselection based on the first parameters.

Obtain a plurality of first parameters related to operating modes, where the operating mode is related to a transmission resource of a network device to which a first cell belongs and/or a function supported by the network device, and the first cell includes a serving cell of a terminal device and/or a neighboring cell of the serving cell — S301

Perform cell reselection based on the first parameters — S302

FIG. 3

**Description**

**TECHNICAL FIELD**

Embodiments of this application relate to the communication field, and in particular, to a cell reselection method and an apparatus.

**BACKGROUND**

Cell reselection (cell reselection) is a process in which a terminal device in an idle (idle) state or an inactive (inactive) state monitors signal quality of a neighboring cell and a current serving cell, to select an optimal cell to provide service signals. In the cell reselection process, the terminal device typically starts cell measurement based on reselection priorities of cells, to select, based on a measurement result, an appropriate cell for access.

With development of mobile communication technologies and network scale expansion, network energy consumption continuously increases, resulting in a significant increase in costs of base stations. To reduce energy consumption of the base stations, some communication systems, for example, 5th generation (5th generation) mobile communication systems introduce the energy saving feature, to reduce energy consumption of the base stations, so as to reduce costs of the base stations.

However, in the cell reselection process, how the terminal device selects, from neighboring cells including an energy-saving cell, an appropriate cell for access becomes an urgent problem to be resolved.

**SUMMARY**

Embodiments of this application provide a cell reselection method and an apparatus, so that in a cell reselection process, a terminal device can select, from neighboring cells including a cell having an energy saving feature, an appropriate cell for access.

According to a first aspect, a cell reselection method is provided. The method may be performed by a terminal device, or may be performed by a component of the terminal device, for example, a processor, a chip, or a chip system of the terminal device, or may be implemented by a logical module or software that can implement all or a part of functions of the terminal device. The method includes: obtaining a plurality of first parameters related to operating modes, where the operating mode is related to a transmission resource of a network device to which a first cell belongs and/or a function supported by the network device, and the first cell includes a serving cell of the terminal device and/or a neighboring cell of the serving cell; and performing cell reselection based on the first parameters.

Based on this solution, the terminal device can perform cell reselection based on the plurality of first parameters related to the operating modes. In other words, in the cell reselection process, an operating mode of a cell can be considered, and a cell can be flexibly selected for camping. For example, for a cell in an operating mode (the operating mode is in a low energy consumption state) in which operations such as active antenna unit AAU shutdown, power amplifier shutdown, radio frequency link shutdown, baseband board shutdown, antenna turning-off, active transmit power adjustment, and/or discontinuous transmission can be performed, when data transmission is performed, a module like an AAU needs to be woken up. Consequently, energy consumption increases when data transmission is performed in the cell. In view of this, in the cell reselection process, it may be considered to avoid the cell in the operating mode, so that a cell selected by the terminal device for camping is in an operating mode other than the operating mode, to avoid camping on the cell in the operating mode, and avoid an increase in energy consumption caused by waking up the cell in the data transmission process.

In a possible design, that the terminal device performs cell reselection based on the first parameters includes: The terminal device determines, from the plurality of first parameters, a second parameter corresponding to a current operating mode of the first cell; and performs cell reselection based on the second parameter.

Based on this possible design, the plurality of first parameters are related only to the operating modes, and cannot directly correspond to each cell in the first cell. Therefore, the terminal device further needs to determine the second parameter from the plurality of first parameters based on the current operating mode of the first cell, and each of the plurality of second parameters correspond to a cell in the first cell. In this way, the terminal device can perform cell reselection based on the second parameter corresponding to each cell.

In a possible design, a correspondence between the operating modes and the first parameters is preconfigured.

In a possible design, a correspondence between the operating mode and a sequence of a synchronization signal is preconfigured.

In a possible design, that the terminal device performs cell reselection based on the first parameters includes: The terminal device performs cell reselection based on the first parameters and a cell reselection priority.

Based on this optional solution, when the first parameter includes a first reselection priority, if the cell reselection priority is configured for the first cell, a priority of the first cell is a sum of the first parameter and the cell reselection priority. Therefore, the terminal device needs to determine the priority of the first cell based on the first parameter and the cell reselection priority, so that cell reselection can be performed based on the priority of the first cell.

In a possible design, that the terminal device performs cell reselection based on the first parameters includes: The terminal device performs cell reselection based on the first parameters, a cell reselection priority, and a cell reselection sub-priority.

Based on this optional solution, when the first parameter includes a first reselection priority, if the cell reselection priority and the cell reselection sub-priority are configured for the first cell, a priority of the first cell is a sum of the first parameter, the cell reselection priority, and the cell reselection sub-priority. Therefore, the terminal device needs to determine the priority of the first cell based on the first parameter, the cell reselection priority, and the cell reselection sub-priority, so that cell reselection can be performed based on the priority of the first cell.

In a possible design, the cell reselection method further includes: The terminal device receives first indication information, where the first indication information indicates the current operating mode of the first cell.

In a possible design, the cell reselection method further includes: The terminal device selects a second cell for camping, where the second cell is a cell in the neighboring cell, and the second cell is a candidate cell for cell reselection.

According to a second aspect, a cell reselection method is provided. The method may be performed by a network device (a network device to which a serving cell belongs), or may be performed by a component of the network device, for example, a processor, a chip, or a chip system of the network device, or may be implemented by a logical module or software that can implement all or a part of functions of the network device. The method includes: determining a plurality of first parameters related to operating modes, where the first parameters are used for cell reselection, the operating mode is related to a transmission resource of a network device to which a first cell belongs and/or a function supported by the network device, and the first cell includes a serving cell of a terminal device and/or a neighboring cell of the serving cell; and sending the plurality of first parameters.

Based on this solution, the network device sends the plurality of first parameters related to the operating modes to the terminal device, so that the terminal device can perform cell reselection based on the plurality of first parameters related to the operating mode. In other words, in the cell reselection process, an operating mode of a cell can be considered, and a cell can be flexibly selected for camping. For example, for a cell in an operating mode (the operating mode is in a low energy consumption state) in which operations such as active antenna unit AAU shutdown, power amplifier shutdown, radio frequency link shutdown, baseband board shutdown, antenna turning-off, active transmit power adjustment, and/or discontinuous transmission can be performed, when data transmission is performed, a module like an AAU needs to be woken up. Consequently, energy consumption increases when data transmission is performed in the cell. In view of this, in the cell reselection process, it may be considered to avoid the cell in the operating mode, so that a cell selected by the terminal device for camping is in an operating mode other than the operating mode, to avoid camping on the cell in the operating mode, and avoid an increase in energy consumption caused by waking up the cell in the data transmission process.

In some possible designs, the cell reselection method further includes: The network device sends a correspondence between the operating modes and the first parameters.

In a possible design, the cell reselection method further includes: The network device sends first indication information, where the first indication information indicates a current operating mode of the first cell.

In a possible design, the cell reselection method further includes: The network device sends a correspondence between the operating mode and a sequence of a synchronization signal.

For technical effect brought by any possible design of the second aspect, refer to technical effect brought by a corresponding design of the first aspect. Details are not described herein again.

With reference to at least one of the first aspect and the second aspect, in some possible designs, the first parameter includes at least one of the following: a first threshold, a second threshold, a signal quality level parameter, and a third threshold, where the first threshold is used to determine whether to start neighboring cell measurement, the second threshold is used for reselection evaluation decision of a high-priority neighboring cell in the neighboring cell, the third threshold is used for reselection evaluation decision of a low-priority neighboring cell in the neighboring cell, and the signal quality level parameter is used for reselection evaluation decision of a same-priority neighboring cell in the neighboring cell.

With reference to at least one of the first aspect and the second aspect, in some possible designs, the first parameter includes at least one of the following: a cell reselection priority related to the operating mode and a cell reselection sub-priority related to the operating mode.

With reference to at least one of the first aspect and the second aspect, in some possible designs, the first parameter includes the first reselection priority.

Based on this possible design, the first parameters may correspond to any one or more parameters in the cell reselection process. For example, the first parameters may correspond to a cell priority (for example, the first reselection priority, the cell reselection priority related to the operating mode, or the cell reselection sub-priority related to the operating mode), the first parameters correspond to a threshold (for example, the first threshold) in a neighboring cell measurement start phase, or the first parameters correspond to parameters (for example, the second threshold, the signal quality level parameter, and the third threshold) in a reselection evaluation decision phase. Therefore, the terminal device can perform cell reselection based on the first parameters, so that in the cell reselection process, an operating mode of a cell can be considered, and a cell can be flexibly selected for camping.

With reference to at least one of the first aspect and the second aspect, in some possible designs, the first indication information includes a synchronization signal of the first cell, and the synchronization signal of the first cell is related to the operating mode.

With reference to at least one of the first aspect and the second aspect, in some possible designs, the first indication information includes information about a neighboring cell list to which the first cell belongs, and the information about the neighboring cell list is related to the operating mode.

With reference to at least one of the first aspect and the second aspect, in some possible designs, the neighboring cell list to which the first cell belongs is a neighboring cell list in a first-type neighboring cell list, a list type of the first-type neighboring cell list includes at least one of an intra-frequency neighboring cell list, an inter-frequency neighboring cell list, or an inter-system neighboring cell, each list type includes N neighboring cell lists, and N is a quantity of types of the operating modes.

With reference to at least one of the first aspect and the second aspect, in some possible designs, the first parameters are carried in system information of the serving cell.

With reference to at least one of the first aspect and the second aspect, in some possible designs, the system information further includes at least one of the following: the correspondence between the operating modes and the first parameters, and the correspondence between the operating mode and the sequence of the synchronization signal.

With reference to at least one of the first aspect and the second aspect, in some possible designs, the first parameters are carried in radio resource control RRC signaling.

With reference to at least one of the first aspect and the second aspect, in some possible designs, the operating mode is related to energy consumption of the first cell.

With reference to at least one of the first aspect and the second aspect, in some possible designs, a sending manner of the system information includes at least one of the following: broadcast and multicast.

According to a third aspect, a communication apparatus is provided, to implement the methods. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system. The communication apparatus includes a corresponding module, unit, or means (means) for implementing the method. The module, the unit, or the means may be implemented by hardware, software, or by hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver machine, a transceiver or a communication interface.

According to a fourth aspect, a communication apparatus is provided, and includes a processor and a memory. The memory is configured to store computer instructions, and when the processor executes the instructions, the communication apparatus is caused to perform the method according to any one of the aspects. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

According to a fifth aspect, a communication apparatus is provided, and includes a processor and a communication interface. The communication interface is configured to communicate with a module outside the communication apparatus, and the processor is configured to execute a computer program or instructions, to cause the communication apparatus to perform the method according to any one of the aspects. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

According to a sixth aspect, a communication apparatus is provided, and includes at least one processor. The processor is configured to execute a computer program or instructions stored in a memory, to cause the communication apparatus to perform the method according to any one of the aspects. The memory may be coupled to the processor, or may be independent of the processor. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

In some possible designs, the communication apparatus includes the memory, and the memory is configured to store necessary program instructions and data.

In some possible designs, when the apparatus is a chip system, the apparatus may include a chip, or may include a chip and another discrete device.

It may be understood that when the communication apparatus provided in any one of the third aspect to the sixth aspect is a chip, a sending action/function of the communication apparatus may be understood as outputting information, and a receiving action/function of the communication apparatus may be understood as inputting information.

According to a seventh aspect, a computer-readable storage medium is provided. The computer-readable storage medium stores a computer program or instructions. When the computer program or the instructions are run on a communication apparatus, the communication apparatus is caused to perform the method according to any one of the aspects.

According to an eighth aspect, a computer program product including instructions is provided. When the computer program product is run on a communication apparatus, the communication apparatus is caused to perform the method according to any one of the aspects.

According to a ninth aspect, a chip is provided, and includes a processor. The processor is coupled to a memory, the memory is configured to store a program or instructions, and when the program or the instructions are executed by the processor, the chip is caused to perform the method according to any one of the aspects.

For technical effect brought by any design manner of the third aspect to the ninth aspect, refer to the technical effect brought by different design manners of the first aspect or the second aspect. Details are not described herein again.

## BRIEF DESCRIPTION OF DRAWINGS

FIG. 1 is a schematic flowchart of cell reselection according to this application;

FIG. 2 is a diagram of an architecture of a mobile communication system to which an embodiment of this application is applied;

FIG. 3 is another schematic flowchart of cell reselection according to this application;

FIG. 4 is another schematic flowchart of cell reselection according to this application;

FIG. 5 is another schematic flowchart of cell reselection according to this application;

FIG. 6 is another schematic flowchart of cell reselection according to this application;

FIG. 7 is another schematic flowchart of cell reselection according to this application;

FIG. 8 is another schematic flowchart of cell reselection according to this application;

FIG. 9 is a diagram of a structure of a communication apparatus according to this application;

FIG. 10 is a diagram of a structure of another communication apparatus according to this application; and

FIG. 11 is a diagram of a structure of another communication apparatus according to this application.

## DESCRIPTION OF EMBODIMENTS

In descriptions of this application, "/" represents an "or" relationship between associated objects unless otherwise specified. For example, A/B may represent A or B. "And/or" in this application represents only an association relationship between associated objects and represents that three relationships may exist. For example, A and/or B may represent the following three cases: Only A exists, both A and B exist, and only B exists, where A and B may be singular or plural.

In the descriptions of this application, "a plurality of" means two or more than two unless otherwise specified. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference.

In embodiments of this application, words such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on a requirement. Correspondingly, the apparatus provided in embodiments of this application may also correspondingly implement these features or functions. Details are not described herein.

It may be understood that, in this application, an "indication" may include a direct indication and an indirect indication, or may include an explicit indication and an implicit indication. The description "specific indication information indicates A" or "indication information of A" may include that the indication information directly indicates A or indirectly indicates A, but does not mean that the indication information necessarily carries A. Information indicated by information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, specific information may be indicated by using an arrangement sequence of a plurality of pieces of information that are pre-agreed on (for example, stipulated in a protocol), to reduce indication overheads to some extent. In addition, a common part of all pieces of information may be identified and indicated in a unified manner, to reduce indication overheads caused by separately indicating same information. Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application needs to be understood as covering various methods that can enable a to-be-indicated party to learn of the to-be-indicated information. The to-be-indicated information may be sent as a whole, or may be divided into a plurality of pieces of sub-information for separate sending. In addition, sending periodicities or sending occasions of the sub-information may be the same or different. A specific sending method is not limited in this application. The sending periodicities or the sending occasions of the sub-information may be predefined, for example, predefined according to a protocol, or may be configured by a transmit-end device by sending configuration information to a receive-end device.

In this application, for same or similar parts of embodiments, mutual reference may be made between the embodiments, unless otherwise specified. In embodiments of this application, unless otherwise specified or a logical conflict occurs, terms and/or descriptions in different embodiments are consistent and may be referenced by each other, and different embodiments may be combined based on internal logical relationships between the embodiments to form a new embodiment. The following implementations of this application are not intended to limit the protection scope of this application.

For ease of understanding of the technical solutions in embodiments of this application, the following first briefly describes technologies related to this application.

1. Energy consumption

The energy consumption refers to consumption of energy (such as power and fuel) during operation of a wireless network.

With continuous development of science and technology, informatization construction gradually deepens, and network traffic continuously increases. To meet requirements of users for network traffic, a scale of the wireless network is continuously expanded. As a result, the energy consumption increases greatly, and network construction costs increase continuously.

For example, a cause of the increase in the energy consumption may include one or more of the following:

(1) in comparison with 3rd generation (3rd generation, 3G) and 4th generation (4th generation, 4G) communication systems, in 5th generation (5th generation, 5G) and 6th generation (6th generation, 6G) communication systems, large-scale use of active antenna units (active antenna units, AAUs) significantly increases a quantity of antennas of a base station, resulting in the increase in the energy consumption;
(2) in comparison with the 3G and 4G communication systems, in the 5G and 6G communication systems, a higher data rate and larger network traffic are implemented by using more transmission bandwidths, resulting in the increase in the energy consumption; and
(3) introduction of the millimeter wave technology and the terahertz technology requires densely deployed base stations, increasing the energy consumption.

To reduce network construction costs and meet regulatory requirements of government departments, network energy saving and energy consumption reduction are required. The 3rd generation partnership project (3rd generation partnership project, 3GPP) release 18 (Release 18, R18, or Rel-18) introduces a network energy saving feature. To be specific, the base station supports functions such as AAU shutdown, active transmit power adjustment, and discontinuous transmission. In other words, the base station has an energy saving feature.

2. Operating mode of a base station

The operating mode of the base station is used to distinguish energy consumption of the base station. In other words, in different operating modes, energy consumption of the base station is different, and further, transmission resources and supported functions of the base station are also different.

The base station may have one or more operating modes. When the base station has one operating mode, it indicates that the base station does not have the energy saving feature. When the base station has one operating mode, there is an operating mode in which operations such as AAU shutdown, power amplifier shutdown, radio frequency link shutdown, baseband board shutdown, antenna turning-off, active transmit power adjustment, and/or discontinuous transmission can be performed in the plurality of operating modes. In addition, in the plurality of operating modes, energy consumption of the operating mode is the smallest. In other words, the base station has the energy saving feature.

The operating mode in which the operations such as AAU shutdown, power amplifier shutdown, radio frequency link shutdown, baseband board shutdown, antenna turning-off, active transmit power adjustment, and/or discontinuous transmission can be performed may be referred to as an energy saving mode, or may be referred to as a sleep mode, or may be referred to as a low energy consumption mode, or may have another name. This is not limited in embodiments of this application. For ease of description, the following describes the operating mode in which operations such as AAU shutdown, active transmit power adjustment, and discontinuous transmission can be performed as the energy-saving mode.

It should be noted that a quantity of types of the plurality of operation modes (or the types of the plurality of operation modes) is not limited in this application. For example, the quantity of types of the operation modes includes two, three, or more than three. When the quantity of types of the operating modes is two, there are two operating modes. The plurality of operating modes need to include the operating mode in which operations such as AAU shutdown, power amplifier shutdown, radio frequency link shutdown, baseband board shutdown, antenna turning-off, active transmit power adjustment, and discontinuous transmission can be performed.

For example, the base station has two operating modes. The two operating modes may include the energy-saving mode and an enhanced output mode. Energy consumption in the enhanced output mode is greater than energy consumption in the energy-saving mode.

3. Cell (cell)

The cell is described by a higher layer from a perspective of resource management or mobility management or a service unit. A coverage range of each base station may be divided into one or more cells, and each cell may correspond to one frequency range. Each cell may operate in the corresponding frequency range. The frequency range may be a frequency or a frequency band. This is not limited in this application.

One or more cells belonging to a same base station have a same operating mode. Therefore, an operating mode of the base station may also be referred to as the operating mode of the cell.

4. Cell reselection (cell reselection)

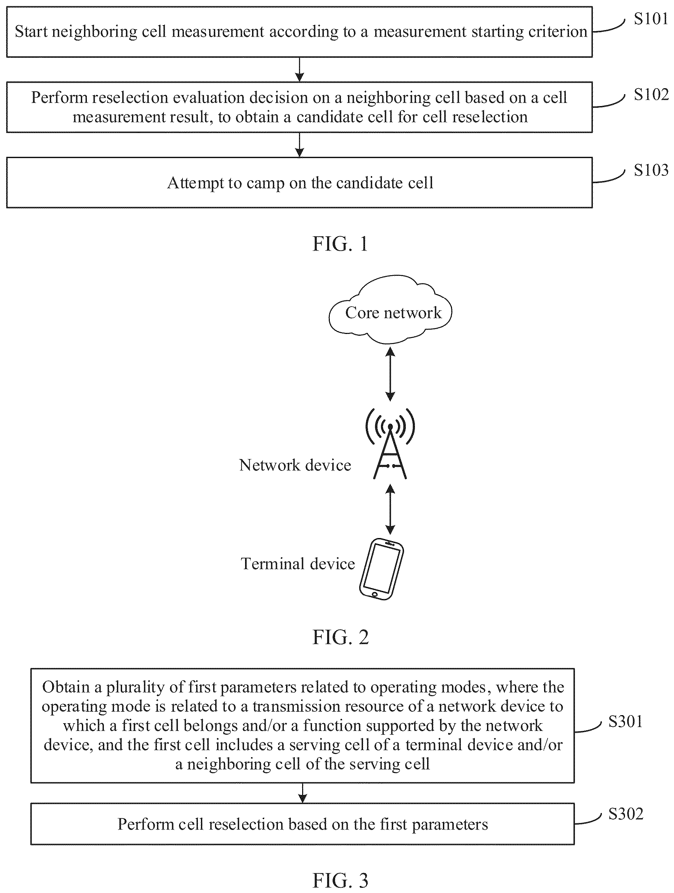

The cell reselection is a process in which a terminal device in a radio resource management (radio resource control, RRC) idle (idle) state or inactive (inactive) state detects signal quality of a neighboring cell and a serving cell, to select a cell with optimal signal quality to provide a service signal. For example, as shown in FIG. 1, the cell reselection process may include the following steps.

S101: The terminal device starts neighboring cell measurement according to a measurement starting criterion.

For example, the neighboring cell may include at least one of the following: a cell that is in a same radio access technology (radio access technology, RAT) system as the serving cell and that is on a same frequency as the serving cell, a cell that is in the same RAT system as the serving cell and that is on a different frequency from the serving cell, and a cell in a different RAT system from the serving cell.

For ease of description, in the following descriptions, the "cell that is in the same radio access technology (radio access technology, RAT) system as the serving cell and that is on the same frequency as the serving cell" is referred to as an intra-frequency neighboring cell, the "cell that is in the same RAT system as the serving cell and that is on a different frequency from the serving cell" is referred to as an inter-frequency neighboring cell, and the "cell in a different RAT system from the serving cell" is referred to as an inter-system neighboring cell.

Specifically, the measurement starting criterion includes:

(1) when a priority of the neighboring cell is higher than a priority of the serving cell, start the neighboring cell measurement; or
(2) when a priority of the neighboring cell is lower than or equal to a priority of the serving cell, if signal quality of the serving cell is less than or equal to a measurement starting threshold, start the neighboring cell measurement.

For example, signal quality of a cell may include a cell selection reception level value (cell selection reception level value, Srxlev) and a cell selection quality value (cell selection quality value, Squal). Srxlev is related to reference signal reception power (reference signal reception power, RSRP), and Squal is related to reference signal reception quality (reference signal reception quality, RSRQ).

A measurement starting threshold corresponding to Srxlev includes an intra-frequency measurement starting threshold $S_{intrasearchP}$ and an inter-frequency/inter-system measurement starting threshold $S_{nonintrasearchP}$. A measurement starting threshold corresponding to Squal includes an intra-frequency measurement starting threshold $S_{intrasearchQ}$ and an inter-frequency/inter-system measurement starting threshold $S_{intrasearchQ}$.

For example, when the neighboring cell of the serving cell includes an intra-frequency neighboring cell whose priority is lower than or equal to that of the serving cell, if the signal quality Srxlev of the serving cell is less than or equal to $S_{intrasearchP}$, and Squal is less than or equal to $S_{intrasearchQ}$, measurement on the intra-frequency neighboring cell is started. When the neighboring cell of the serving cell includes an inter-frequency neighboring cell or an inter-system neighboring cell whose priority is lower than or equal to that of the serving cell, if the signal quality Srxlev of the serving cell is equal to $S_{nonintrasearchP}$, and Squal is less than or equal to $S_{nonintrasearchQ}$, measurement on the inter-frequency neighboring cell or the inter-system neighboring cell is started.

It should be understood that a priority of an intra-frequency neighboring cell is usually equal to the priority of the serving cell, and a cell whose priority is lower than that of the serving cell is usually an inter-frequency neighboring cell or an inter-system neighboring cell.

New radio (new radio, NR) is used as an example. A cell priority is carried in system information of the serving cell, and/or the cell priority is carried in an RRC release (release) message. When the cell priority is carried in the system information of the serving cell, the cell priority may also be referred to as a general priority. When the cell priority is carried in the RRC release message, the cell priority may also be referred to as a dedicated priority. When the neighboring cell includes the inter-system neighboring cell, the dedicated priority may alternatively be inherited from the RAT system accessed by the terminal device. When the cell priority obtained by the terminal device includes the general priority and the dedicated priority, the dedicated priority is determined as a cell priority in the cell reselection process.

The following uses an example in which the cell priority is the general priority for description. The cell priority is a cell reselection priority in the system information.

For example, a value of the cell reselection priority may include any one of [0, 7]. A larger value of the cell reselection priority indicates a higher priority of a corresponding cell.

However, a communication system includes a global system for mobile communications (global system for mobile communications, GMS), a universal mobile telecommunications system (universal mobile telecommunications system, UMTS), a long term evolution (long term evolution, LTE) system, an NR system, and the like, and different values of cell reselection priorities are insufficient to correspond to cells in the systems. Therefore, a cell reselection sub-priority is introduced, and a sum of the cell reselection priority and the cell reselection sub-priority is used as a cell priority, so that different values of cell priorities can correspond to cells in different systems.

A value of the cell reselection sub-priority is the same as the value of the cell reselection priority. For details, refer to the related descriptions of the cell reselection priority. Details are not described herein again.

S102: The terminal device performs reselection evaluation decision on the neighboring cell based on a cell measurement result, to obtain a candidate cell for cell reselection.

Based on the cell priority, the neighboring cell may include at least one of the following: a cell whose priority is higher than the priority of the serving cell, a cell whose priority is equal to the priority of the serving cell, and a cell whose priority is lower than the priority of the serving cell.

For ease of understanding, in the following descriptions, the "cell whose priority is higher than the priority of the serving cell" is referred to as a high-priority neighboring cell, the "cell whose priority is equal to the priority of the serving cell" is referred to as a same-priority neighboring cell, and the "cell whose priority is lower than the priority of the serving cell" is referred to as a low-priority neighboring cell.

The reselection evaluation decision means that the terminal device determines whether the neighboring cell meets a reselection condition. Specifically, the reselection condition includes the following conditions.

(1) When the neighboring cell includes at least one high-priority neighboring cell, the reselection condition includes a first reselection condition: Signal quality of the high-priority neighboring cell is greater than a high-priority reselection threshold ($Thresh_{X,high}$), and duration in which the terminal device camps on the serving cell is greater than 1 second (second, s).

For example, $Thresh_{X,high}$ includes $Thresh_{X,highP}$ corresponding to Srxlev, and $Thresh_{X,high}$ further includes $Thresh_{X,highQ}$ corresponding to Squal.

In addition, a low-priority threshold $Thresh_{serving,low}$ of the serving cell includes $Thresh_{serving,lowP}$ corresponding to Srxlev, and $Thresh_{serving,low}$ further includes $Thresh_{serving,lowQ}$ corresponding to Squal.

Optionally, when the system information includes $Thresh_{serving,lowQ}$, $Thresh_{X,highQ}$ is used as $Thresh_{X,high}$, and Squal is used as the signal quality of the cell. When the system information does not include $Thresh_{serving,low}$, $Thresh_{X,highP}$ is used as $Thresh_{X,high}$, and Srxlev is used as the signal quality of the cell.

(2) When the at least one high-priority neighboring cell does not meet the first reselection condition, and the neighboring cell includes at least one same-priority neighboring cell, the reselection condition includes a second reselection condition: In a cell reselection triggering timer (cell reselection triggering timer, treselection), a signal quality level of the same-priority neighboring cell is higher than a signal quality level of the serving cell, and the duration in which the terminal device camps on the serving cell is greater than 1s.

For example, the signal quality level of the serving cell meets the following relationship (1), and the signal quality of the same-priority neighboring cell meets the following relationship (2):

$$R_s = Q_{meas,s} + Q_{hyst} + Q_{offsettemp} \qquad (1)$$

$$R_n = Q_{meas,n} + Q_{offset} + Q_{offsettemp} \qquad (2)$$

Parameters in the foregoing relationships may be shown in Table 1.

Table 1

| Parameter | Description |
|---|---|
| $R_s$ | Signal quality level of a serving cell |

(continued)

| Parameter | Description |
|---|---|
| $Q_{meas,s}$ | RSRP value of a serving cell |
| $Q_{hyst}$ | Hysteresis value of a serving cell |
| $Q_{offsettemp}$ | Temporary offset applied to a cell |
| $R_n$ | Signal quality level of a same-priority neighboring cell |
| $Q_{meas,n}$ | RSRP value of a same-priority neighboring cell |
| $Q_{offset}$ | Compensation value of a same-priority neighboring cell, where (1) when the neighboring cell is an intra-frequency cell, if $Q_{offset}$ is valid, the offset is $Q_{offset}$; and if $Q_{offset}$ is invalid, the offset is 0; and (2) when the neighboring cell is an inter-frequency cell, if $Q_{offset}$ is valid, the offset is a sum of $Q_{offset}$ and $Q_{offsetfrequency}$; and if $Q_{offset}$ is invalid, the offset is $Q_{offsetfrequency}$ |
| $Q_{offsetfrequency}$ | Compensation value of a frequency of a same-priority neighboring cell |

(3) When the at least one high-priority neighboring cell does not meet the first reselection condition, the at least one same-priority neighboring cell does not meet the second reselection condition, and the neighboring cell includes at least one low-priority neighboring cell, the reselection condition includes a third reselection condition: Within the treselection, the signal quality of the serving cell is less than $Thresh_{serving,low}$, signal quality of the low-priority neighboring cell is greater than a low-priority reselection threshold $(Thresh_{X,low})$, and the duration in which the terminal device camps on the serving cell is greater than 1s.

For example, $Thresh_{X,low}$ includes $Thresh_{X,lowP}$ corresponding to Srxlev, and $Thresh_{X,low}$ further includes $Thresh_{X,lowQ}$ corresponding to Squal.

Optionally, when the system information includes $Thresh_{serving,lowQ}$, $Thresh_{X,lowQ}$ is used as $Thresh_{X,low}$, and Squal is used as the signal quality of the cell. When the system information does not include $Thresh_{serving,lowQ}$, $Thresh_{X,lowP}$ is used as $Thresh_{X,low}$, and Srxlev is used as the signal quality of the cell.

In step S102, the terminal device determines a cell that meets the reselection condition in the neighboring cell as the candidate cell. If there are a plurality of cells that meet the reselection condition in the neighboring cell, the terminal device determines a cell with optimal signal quality in the plurality of cells that meet the reselection condition as the candidate cell.

It should be understood that, when a high-priority neighboring cell in the neighboring cell meets the first reselection condition, reselection evaluation decision does not need to be performed on a same-priority neighboring cell and a low-priority neighboring cell. Similarly, when a same-priority neighboring cell in the neighboring cell meets the second reselection condition, reselection evaluation decision does not need to be performed on a low-priority neighboring cell. In other words, the foregoing plurality of cells that meet the reselection condition meet the same reselection condition. For example, the plurality of cells that meet the reselection condition include at least one of the following: a plurality of high-priority neighboring cells, a plurality of same-priority neighboring cells, and a plurality of low-priority neighboring cells.

S103: The terminal device attempts to camp on the candidate cell.

For example, the terminal device may perform cell search on the candidate cell, receive system information from the candidate cell, and determine, based on the system information of the candidate cell, whether the candidate cell can be normally camped on. For example, whether access is restricted (for example, whether information carried in the system information of the candidate cell is barred (barred) or reserved (reserved)) is determined based on the system information of the candidate cell. When the candidate cell can be accessed, the terminal device camps on the candidate cell. In other words, the terminal device reselects a target cell.

In addition, if none of the neighboring cells in step S102 meets the reselection condition, the terminal device continues to camp on the serving cell.

The cell priority, the measurement starting threshold, $Thresh_{X,high}$, the signal quality level, and $Thresh_{X,low}$ may be configured at a frequency-level granularity, or may be configured at a system (namely, RAT)-level granularity. In other words, when configuration is performed at the frequency-level granularity, cells on a same frequency have a same cell priority, a same measurement starting threshold, same $Thresh_{X,high}$, a same parameter used to calculate a signal quality level, and same $Thresh_{X,low}$. When configuration is performed at the system-level granularity, cells in a same system have a same cell priority, a same measurement starting threshold, same $Thresh_{X,high}$, a same parameter used to calculate a signal quality level, and same $Thresh_{X,low}$.

In other words, the parameters used for cell reselection are related only to the frequency of the cell or the system to which the cell belongs. Therefore, in the cell reselection process shown in FIG. 1, there may be a case in which an operating mode of the candidate cell is an energy saving mode. If the terminal device still chooses to camp on the candidate cell, after the terminal device accesses the cell, if there is a data transmission requirement between the terminal device and the cell, a sleeping device like a power amplifier (power amplifier, PA) or an active antenna unit AAU needs to be woken up to complete data transmission. However, waking up the sleeping device may cause an increase in energy consumption of the base station, and reduce energy saving effect of the base station.

In view of this, this application provides a cell reselection method, so that the terminal device can perform cell reselection based on a plurality of first parameters related to operating modes. In other words, in the cell reselection process, an operating mode of a cell can be considered, and a cell can be flexibly selected for camping. For example, for a cell in an operating mode (the operating mode is in a low energy consumption state) in which operations such as active antenna unit AAU shutdown, active transmit power adjustment, and/or discontinuous transmission can be performed, when data transmission is performed, a sleeping device needs to be woken up. Consequently, energy consumption increases when data transmission is performed in the cell. In view of this, in the cell reselection process, it may be considered to avoid the cell in the operating mode, so that a cell selected by the terminal device for camping is in an operating mode other than the operating mode, to avoid camping on the cell in the operating mode, and avoid an increase in energy consumption caused by waking up the cell in the data transmission process.

The technical solutions provided in this application may be applied to various communication systems. The communication systems may be a 4G LTE system, an LTE-advanced (LTE-Advanced, LTE-A) system, a 5G NR system, a vehicle to everything (vehicle to everything, V2X) system, an LTE-NR hybrid networking system, a device-to-device (device-to-device, D2D) system, a machine to machine (machine to machine, M2M) communication system, internet of things (internet of things, IoT), a non-terrestrial network (non-terrestrial network, NTN), a cellular mobile communication system (cellular mobile communication system), a non-terrestrial communication NTN, a satellite communication system, a high altitude platform station (high altitude platform station, HAPS) communication system, an integrated access and backhaul (integrated access and backhaul, IAB) communication system, a reconfigurable intelligent surface (reconfigurable intelligent surface, RIS) communication system, another next-generation communication system like a 6th generation (6th generation, 6G) communication system, or the like. Alternatively, the communication system may be a non-3GPP communication system. This is not limited.

FIG. 2 shows a communication system to which an embodiment of this application is applied. The communication system includes a terminal device and a network device.

For example, the terminal device and the network device can communicate with each other. To be specific, data from a core network may be sent to the terminal device through the network device, and data from the terminal device may also be sent to the core network through the network device.

Optionally, a standard of the network device is the same as that of the core network, that is, the network device and the core network are in a same system. For example, the network device and the core network may be in a 5G system or a 6G system.

Optionally, the network device in this embodiment of this application is a device that connects the terminal device to a wireless network. The network device may be a node in a radio access network, and may be referred to as a base station or a radio access network (radio access network, RAN) node.

For example, the network device may include an evolved NodeB (NodeB or eNB or e-NodeB, evolutional NodeB) in an LTE system or an LTE-A system, for example, a conventional macro base station eNB and a micro base station eNB in a heterogeneous network scenario; or may include a next generation NodeB (next generation NodeB, gNB) in an NR system; or may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like; or may include a base station in an NTN, that is, may be deployed on a high altitude platform or a satellite. In the NTN, the network device may serve as a layer 1 (L1) relay (relay), or may serve as a base station, or may serve as a DU, or may serve as an IAB node. Alternatively, the network device may be a device that implements a base station function in IoT, for example, a device that implements the base station function in V2X, D2D, or machine to machine (machine to machine, M2M). This is not limited in embodiments of this application.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

Optionally, the terminal device in embodiments of this application may be a user-side device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) that evolves after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in the IoT, for example, a terminal in V2X (for example, a vehicle to everything device), a terminal in D2D communication, or a terminal in M2M communication. The terminal may be mobile or fixed.

The following describes the cell reselection method provided in embodiments of this application with reference to the accompanying drawings. It may be understood that in embodiments of this application, the network device or the terminal device may perform some or all of the steps in embodiments of this application, and these steps or operations are merely examples. In embodiments of this application, another operation or various operation variations may be further performed. In addition, the steps may be performed in a sequence different from a sequence presented in embodiments of this application, and not all the operations in embodiments of this application may be performed.

FIG. 3 shows a cell reselection method according to this application. The cell reselection method may include the following steps.

S301: A terminal device obtains a plurality of first parameters related to operating modes. The operating mode is related to a transmission resource of a network device to which a first cell belongs and/or a function supported by the network device of the network device to which the first cell belongs, and the first cell includes a serving cell of the terminal device and/or a neighboring cell of the serving cell.

It should be understood that the first parameter related to the operating mode may be understood as that the first parameter is determined based on the operating mode, and each operating mode corresponds to one first parameter. For example, the plurality of first parameters may be respectively related to different operating modes, that is, each first parameter corresponds to a different operating mode.

Optionally, that the operating mode is related to the transmission resource of the network device to which the first cell belongs and/or the function supported by the network device may be understood as that for any cell in the first cell, in different operating modes, transmission resources of a network device to which the cell belongs are different, and/or functions supported by the network device to which the cell belongs are different.

For example, the transmission resource may include at least one of the following: a time domain resource, a frequency domain resource, a space domain resource, and a power domain resource.

Optionally, the operating mode is related to energy consumption of the first cell. Because the operating mode is related to the transmission resource of the network device to which the first cell belongs and/or the function supported by the network device to which the first cell belongs, the energy consumption of the first cell varies with the transmission resource and/or the function supported by the network device. Therefore, it may be considered that the operating mode is related to the energy consumption of the first cell.

For example, the energy consumption of the first cell is positively correlated with the transmission resource of the network device to which the first cell belongs.

Optionally, the first parameter may include the following three possible implementations.

In a first possible implementation, the first parameter may include a parameter used to determine a cell priority during cell reselection. For example, the first parameter may include the following two cases.

Case 1: The first parameter includes a priority-related parameter in the cell reselection process. For example, the first parameter includes at least one of the following: a cell reselection priority related to the operating mode and/or a cell reselection sub-priority related to the operating mode.

When the first parameter includes the cell reselection priority related to the operating mode, the first parameter has all features of the cell reselection priority in step S101. In addition, the first parameter is related to the operating mode. When the first parameter includes the cell reselection sub-priority related to the operating mode, the first parameter has all features of the cell reselection sub-priority in step S101. In addition, the first parameter is related to the operating mode.

Case 2: A priority used for cell reselection and related to the operating mode is added. The added priority may be referred to as a first reselection priority. In other words, the first parameter includes the first reselection priority.

For example, a value of the first reselection priority may include any one of [0, 7]. A larger value of the first reselection priority indicates a higher priority of a corresponding cell.

It should be noted that the first reselection priority may also be referred to as a priority related to the operating mode, or may be referred to as a priority related to the energy consumption, or may be referred to as an energy consumption priority. This is not limited in this application.

In a second possible implementation, the first parameter includes at least one of the following: a first threshold, a second threshold, a signal quality level parameter, and a third threshold. The first threshold is used to determine whether to start neighboring cell measurement, the second threshold is used for reselection evaluation decision of a high-priority neighboring cell in the neighboring cell, the third threshold is used for reselection evaluation decision of a low-priority neighboring cell in the neighboring cell, and the signal quality level parameter is used for reselection evaluation decision of a same-priority neighboring cell in the neighboring cell.

Specifically, the first threshold has all features of the measurement starting threshold in step S101. In addition, the first threshold is related to the operating mode. Therefore, the first threshold may also be referred to as a measurement starting threshold related to the operating mode.

For example, the first threshold includes a measurement starting threshold (referred to as a first measurement starting threshold below) that corresponds to Srxlev and that is related to the operating mode, for example, $S_{intrasearchP}$ related to the operating mode and/or $S_{nonintrasearchP}$ related to the operating mode. Further, the first threshold further includes a measurement starting threshold (referred to as a second measurement starting threshold below) that corresponds to Squal and that is related to the operating mode, for example, $S_{intrasearchQ}$ related to the operating mode and/or $S_{nonintrasearchQ}$ related to the operating mode.

The second threshold has all features of $Thresh_{X,high}$ in step S102. In addition, the second threshold is related to the operating mode. Therefore, the second threshold may also be referred to as a high-priority reselection threshold related to the operating mode.

For example, the second threshold includes $Thresh_{X,highP}$ related to the operating mode, and the second threshold further includes $Thresh_{X,highQ}$ related to the operating mode.

The third threshold includes a fourth threshold and/or a fifth threshold. The fourth threshold is used to determine signal quality of the serving cell in the reselection evaluation decision of the low-priority neighboring cell, and the fifth threshold is used to determine signal quality of the low-priority neighboring cell in the reselection evaluation decision of the low-priority neighboring cell.

For example, the fourth threshold has all features of $Thresh_{serving,low}$ in S102. In addition, the fourth threshold is related to the operating mode. Therefore, the fourth threshold may also be referred to as a low-priority threshold of the serving cell related to the operating mode. The fifth threshold has all features of $Thresh_{X,low}$ in S102. In addition, the fifth threshold is further related to the operating mode. Therefore, the fifth threshold may also be referred to as a low-priority reselection threshold related to the operating mode.

For example, the fourth threshold includes $Thresh_{serving,lowP}$ related to the operating mode. Further, the fourth threshold includes $Thresh_{serving,lowQ}$ related to the operating mode. The fifth threshold includes $Thresh_{X,lowP}$ related to the operating mode. Further, the fifth threshold includes $Thresh_{X,lowQ}$ related to the operating mode.

The signal quality level parameter includes a level parameter of the serving cell and a level parameter of the same-priority neighboring cell. The level parameter of the serving cell is used to determine a signal quality level of the serving cell, and the level parameter of the same-priority neighboring cell is used to determine a signal quality level of the same-priority neighboring cell.

For example, the level parameter of the serving cell includes: $Q_{meas,s}$ related to the operating mode, $Q_{hyst}$ related to the operating mode, and $Q_{offsettemp}$ related to the operating mode. The level parameter of the same-priority neighboring cell includes: $Q_{meas,n}$ related to the operating mode, $Q_{offset}$ related to the operating mode, and $Q_{offsettemp}$ related to the operating mode.

In a third possible implementation, with reference to the first possible implementation and the second possible implementation, the first parameter includes at least one of the following: a parameter used to determine a cell priority during cell reselection, a first threshold, a second threshold, a signal quality level parameter, and a third threshold.

For example, when the first parameter includes the parameter used to determine the cell priority during cell reselection, for the first parameter, refer to the related descriptions in the first possible implementation. When the first parameter includes at least one of the first threshold, the second threshold, the signal quality level parameter, and the third threshold, for the first parameter, refer to the related descriptions in the second possible implementation. Details are not described herein again in embodiments of this application.

Based on this optional solution, the first parameters may correspond to any one or more parameters in the cell reselection process. For example, the first parameters may correspond to a cell priority (for example, the first reselection priority, the cell reselection priority related to the operating mode, or the cell reselection sub-priority related to the operating mode), the first parameters correspond to a threshold (for example, the first threshold) in a neighboring cell measurement start phase, or the first parameters correspond to parameters (for example, the second threshold, the signal quality level parameter, and the third threshold) in a reselection evaluation decision phase. Therefore, the terminal device can perform cell reselection based on the first parameters, so that in the cell reselection process, an operating mode of a cell can be considered, and a cell can be flexibly selected for camping.

S302: The terminal device performs cell reselection based on the first parameters.

Optionally, that the terminal device performs cell reselection based on the first parameters includes: The terminal device determines, from the plurality of first parameters, a second parameter corresponding to a current operating mode of the first cell; and performs cell reselection based on the second parameter.

It should be understood that the first cell mentioned in this application is each cell in the first cell. For example, the current operating mode of the first cell is a current operating mode of each cell in the first cell. Therefore, determining the second parameter corresponding to the current operating mode of the first cell may be understood as: The terminal device determines, based on the current operating mode of each cell in the first cell, the second parameter corresponding to each cell. In other words, a quantity of second parameters is consistent with a quantity of first cells. In subsequent descriptions, unless otherwise specified, the first cell refers to each cell in the first cell. This is uniformly described herein, and details are not described again.

For example, when the first parameter includes the cell reselection priority related to the operating mode, an operation that is the same as that performed based on the cell reselection priority in FIG. 1 is performed based on the second parameter determined based on the first parameter. Details are not described herein again in embodiments of this application. Similarly, when the first parameter includes at least one of the cell reselection sub-priority related to the operating mode, the first threshold, the second threshold, the third threshold, and the signal quality level parameter, an operation that is the same as that performed based on the corresponding parameter in FIG. 1 is performed based on the second parameter determined based on the first parameter. Details are not described herein again in embodiments of this application.

Optionally, when the first parameter includes the first reselection priority, a process in which the terminal device performs cell reselection based on the first parameters may be implemented based on two scenarios.

Scenario 1: A cell reselection priority is configured for the first cell.

In the scenario 1, the performing cell reselection based on the first parameters includes: performing cell reselection based on the first parameters and the cell reselection priority.

Optionally, the terminal device determines, based on the plurality of first parameters, the second parameter corresponding to the first cell, and then determines a priority of the first cell based on the second parameter and the cell reselection priority of the first cell. In the process of performing cell reselection, an operation that is the same as that performed based on the cell priority in FIG. 1 is performed based on the priority of the first cell. Details are not described herein again in embodiments of this application.

For example, the priority of the first cell may be a sum of the second parameter and the cell reselection priority that is of the first cell and that is related to the operating mode.

Based on the scenario 1, when the first parameter includes the first reselection priority, if the cell reselection priority is configured for the first cell, the priority of the first cell is a sum of the first parameter and the cell reselection priority. Therefore, the terminal device needs to determine the priority of the first cell based on the first parameter and the cell reselection priority, so that cell reselection can be performed based on the priority of the first cell.

Scenario 2: A cell reselection priority and a cell reselection sub-priority are configured for the first cell.

In the scenario 2, the performing cell reselection based on the first parameters includes: performing cell reselection based on the first parameters, the cell reselection priority, and the cell reselection sub-priority.

Optionally, the terminal device determines, based on the plurality of first parameters, the second parameter corresponding to the first cell, and then determines the priority of the first cell based on the second parameter, the cell reselection priority of the first cell, and the cell reselection sub-priority of the first cell. In the process of performing cell reselection, an operation that is the same as that performed based on the cell priority in FIG. 2 is performed based on the priority of the first cell. Details are not described herein again in embodiments of this application.

For example, the priority of the first cell may be a sum of the second parameter, the cell reselection priority of the first cell, and the cell reselection sub-priority of the first cell.

It should be noted that the foregoing two scenarios are described by using an example in which cell reselection priorities are configured for all cells in the first cell, or cell reselection priorities and cell reselection sub-priorities are configured for all cells in the first cell. Actually, in this embodiment of this application, further supported is a case in which cell reselection priorities are configured for one part of cells in the first cell, and cell reselection priorities and cell reselection sub-priorities are configured for the other part of cells. In this case, priorities of the part of cells may be determined with reference to the solution in the scenario 1, and priorities of the other part of cells may be determined based on the solution in the scenario 2.

Based on the scenario 2, when the first parameter includes the first reselection priority, if the cell reselection priority and the cell reselection sub-priority are configured for the first cell, the priority of the first cell is a sum of the first parameter, the cell reselection priority, and the cell reselection sub-priority. Therefore, the terminal device needs to determine the priority of the first cell based on the first parameter, the cell reselection priority, and the cell reselection sub-priority, so that cell reselection can be performed based on the priority of the first cell.

Based on step S302, the plurality of first parameters are related only to the operating modes, and cannot directly correspond to each cell in the first cell. Therefore, the terminal device further needs to determine the second parameter from the plurality of first parameters based on the current operating mode of the first cell, and each of the plurality of second parameters correspond to a cell in the first cell. In this way, the terminal device can perform cell reselection based on the second parameter corresponding to each cell.

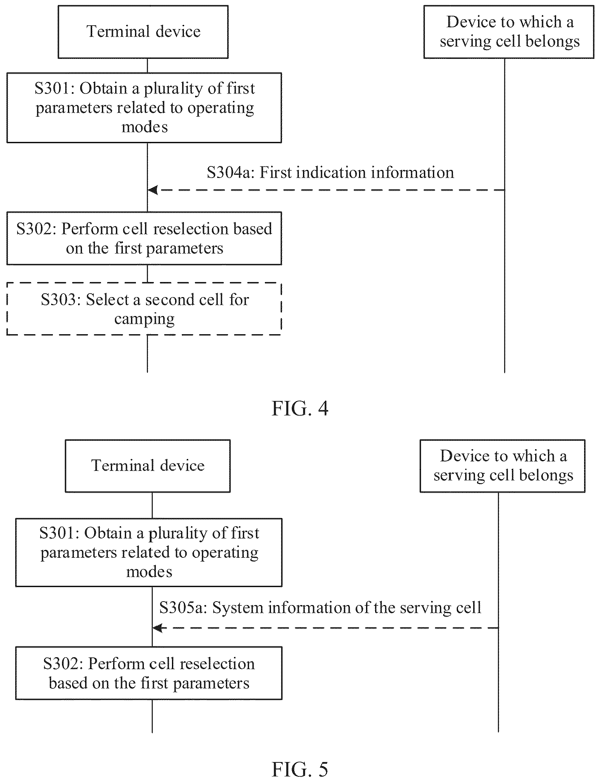

Optionally, after step S302, as shown in FIG. 4, the cell reselection method may further include step S303.

S303: The terminal device selects a second cell for camping, where the second cell is a cell in the neighboring cell, and the second cell is a candidate cell for cell reselection.

According to the cell reselection method in this embodiment of this application, the terminal device can perform cell reselection based on the plurality of first parameters related to the operating modes. In other words, in the cell reselection process, an operating mode of a cell can be considered, and a cell can be flexibly selected for camping. For example, for a cell in an operating mode (the operating mode is in a low energy consumption state) in which operations such as AAU shutdown, power amplifier shutdown, radio frequency link shutdown, baseband board shutdown, antenna turning-off, active transmit power adjustment, and/or discontinuous transmission can be performed, when data transmission is performed, a sleeping device like a power amplifier (power amplifier, PA) or an active antenna processing unit AAU is required. Consequently, energy consumption increases when data transmission is performed in the cell. In view of this, in the cell reselection process, it may be considered to avoid the cell in the operating mode, so that a cell selected by the terminal device for camping is in an operating mode other than the operating mode, to avoid camping on the cell in the operating mode, and avoid an increase in energy consumption caused by waking up the cell in the data transmission process.

The foregoing is overall descriptions of embodiments of this application. The following describes the current operating mode of the first cell in the foregoing embodiments.

Optionally, the terminal device determines the current operating mode of the first cell based on an indication of first indication information. In other words, the first indication information indicates the current operating mode of the first cell. For example, the current operating mode of the first cell may be determined in the following two manners.

Manner 1: The current operating mode of the first cell is determined by using a synchronization signal of the first cell. The synchronization signal of the first cell is related to the operating mode. In other words, the current operating mode of the first cell is indicated by the synchronization signal of the first cell. In other words, the first indication information includes the synchronization signal of the first cell.

Optionally, before step S302, as shown in FIG. 4, the cell reselection method further includes step S304a.

S304a: The network device to which the first cell belongs sends the first indication information to the terminal device, and correspondingly, the terminal device receives the first indication information from the network device to which the first cell belongs. The first indication information indicates the current operating mode of the first cell.

For example, the first indication information includes a plurality of pieces of information that respectively indicate current operating modes of the cells in the first cell. For example, the first cell includes three cells. In this case, the first indication information includes information #1, information #2, and information #3. The information #1 may indicate a current operating mode of a cell #1, the information #2 may indicate a current operating mode of a cell #2, and the information #3 may indicate a current operating mode of a cell #3.

In a possible example, different sequences of synchronization signals correspond to different operating modes. Therefore, the current operating mode of the first cell may be determined based on a sequence of the synchronization signal of the first cell.

Optionally, a correspondence between an operating mode and a sequence of a synchronization information signal is preconfigured. For ease of description, the correspondence between the operating mode and the sequence of the synchronization information signal is referred to as a first correspondence below. For example, the first correspondence is predefined in a protocol. Alternatively, the first correspondence is preconfigured by the network device and notified to the terminal device.

Optionally, when the first correspondence is configured by the network device and notified to the terminal device, the network device may notify the terminal device of the first correspondence in the following two manners.

In a first possible implementation, the network device notifies the terminal device of the first correspondence by using system information of the serving cell. The system information of the serving cell includes the first correspondence. In other words, the first correspondence is carried in the system information of the serving cell.

For example, before step S301, as shown in FIG. 5, the cell reselection method further includes step S305a.

S305a: The network device to which the serving cell belongs sends the system information of the serving cell to the terminal device. Correspondingly, the terminal device receives the system information of the serving cell from the network device to which the serving cell belongs.

Optionally, a manner in which the network device to which the serving cell belongs sends the system information of the serving cell includes any one of broadcast, multicast, unicast, and groupcast.

In a second possible implementation, the network device to which the serving cell belongs notifies the terminal device of the first correspondence by using RRC signaling. The RRC signaling includes the first correspondence. In other words, the first correspondence is carried in the RRC signaling.

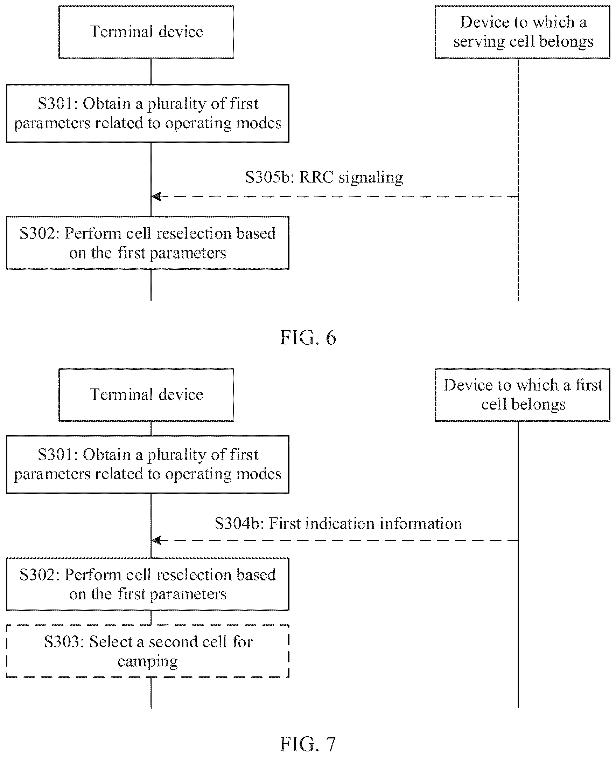

For example, before step S301, as shown in FIG. 6, the cell reselection method further includes step S305b.

S305b: The network device to which the serving cell belongs sends the RRC signaling to the terminal device. Correspondingly, the terminal device receives the RRC signaling from the network device to which the serving cell belongs.

Optionally, a quantity of first correspondences is greater than or equal to one.

For example, the network device to which the serving cell belongs configures the first correspondence and notifies the terminal device that the first correspondence is carried in the system information of the serving cell. The first correspondence may be separately configured for one cell of the first cell. In other words, different cells respectively correspond to different first correspondences. In this case, the quantity of first correspondences is the same as the quantity of first cells. Alternatively, the first correspondence may be configured for cells that are in the first cell and that are located at a same frequency. In other words, different frequencies respectively correspond to different first correspondences. In this case, the quantity of first correspondences is the same as a quantity of frequencies on which the cells in the first cell are located. Alternatively, the first correspondence may be configured for cells in a same system in the first cell. In other words, different systems respectively correspond to different first correspondences. In this case, the quantity of first correspondences is the same as a quantity of systems in which the cells in the first cell are located. Alternatively, the first correspondence may be configured for an entire system. In other words, all the cells in the first cell correspond to the same first correspondence. In this case, the quantity of first correspondences is one.

In a first example, the first correspondence may be represented by a table. For example, in two operating modes (an operating mode #1 and an operating mode #2), a sequence of a synchronization signal corresponding to the operating mode #1 is a sequence #1, and a sequence of a synchronization signal corresponding to the operating mode #2 is a sequence #2. The first correspondence may include content shown in Table 2.

Table 2

| Operating mode | Sequence of a synchronization signal |
|---|---|
| Operating mode #1 | Sequence #1 |
| Operating mode #2 | Sequence #2 |

In a second example, the first correspondence may be represented by a set. For example, in two operating modes (an operating mode #1 and an operating mode #2), a sequence of a synchronization signal corresponding to the operating mode #1 is a sequence #1, and a sequence of a synchronization signal corresponding to the operating mode #2 is a sequence #2. The first correspondence may include the following content: {operating mode #1: sequence #1} {operating mode #2: sequence #2}.

In another possible example, different time-frequency resources occupied by synchronization signals correspond to different operating modes. Therefore, the current operating mode of the first cell may be determined based on a time-frequency resource occupied by the synchronization signal of the first cell.

Optionally, a correspondence between an operating mode and a time-frequency resource occupied by a synchronization information signal is preconfigured. For ease of description, the correspondence between the operating mode and the time-frequency resource occupied by the synchronization information signal is referred to as a second correspondence below.

For example, a manner of preconfiguring the second correspondence is the same as the manner of preconfiguring the first correspondence. For details, refer to the related descriptions of the manner of preconfiguring the first correspondence. Details are not described herein again in embodiments of this application.

In a first example, the second correspondence may be represented by a table. For example, in two operating modes (the operating mode #1 and the operating mode #2), a time-frequency resource occupied by the synchronization signal corresponding to the operating mode #1 is a time-frequency resource #1, and a time-frequency resource occupied by the synchronization signal corresponding to the operating mode #2 is a time-frequency resource #2. The second correspondence may include content shown in Table 3.

Table 3

| Operating mode | Time-frequency resource occupied by a synchronization signal |
|---|---|
| Operating mode #1 | Time-frequency resource 1 |
| **Operating** mode #2 | Time-frequency resource 2 |

In a second example, the second correspondence may be represented by a set. For example, in two operating modes (the operating mode #1 and the operating mode #2), a time-frequency resource occupied by the synchronization signal corresponding to the operating mode #1 is a time-frequency resource #1, and a time-frequency resource occupied by the synchronization signal corresponding to the operating mode #2 is a time-frequency resource #2. The second correspondence may include the following content: {operating mode #1: time-frequency resource #1} {operating mode #2: time-frequency resource #2}.

Manner 2: When the first cell includes the neighboring cell, in addition to Manner 1, the current operating mode of the first cell may be determined in the following manner.

Optionally, before step S302, as shown in FIG. 7, the cell reselection method further includes step S304b.

S304b: The network device to which the serving cell belongs sends the first indication information to the terminal device, and correspondingly, the terminal device receives the first indication information from the network device to which the serving cell belongs. The first indication information indicates the current operating mode of the first cell.

Optionally, the first indication information includes information about a neighboring cell list to which the first cell belongs. The information about the neighboring cell list is related to the operating mode. In other words, the current operating mode of the first cell may be determined based on the information about the neighboring cell list to which the first cell belongs.

Optionally, a neighboring cell list to which the first cell belongs is a neighboring cell list in a first-type neighboring cell list, a list type of the first-type neighboring cell list includes at least one of an intra-frequency neighboring cell list, an inter-frequency neighboring cell list, or an inter-system neighboring cell list, each list type includes N neighboring cell lists, and N is a quantity of types of the operating modes (namely, categories of the operating modes).

Two operating modes (for example, the operating mode #1 and the operating mode #2) are used as an example. In this case, N is 2, that is, each list type includes two neighboring cell lists. In other words, the first-type neighboring cell list includes six lists. For example, for the intra-frequency neighboring cell list, cells in the intra-frequency neighboring cell list in the operating mode #1 include cells that are in the neighboring cell and that are on a same frequency as the serving cell and whose operating mode is the operating mode #1; and cells in the intra-frequency neighboring cell list in the operating mode #2 include cells that are in the neighboring cell and that are on the same frequency as the serving cell and whose operating mode is the operating mode #2. Each list in the inter-frequency neighboring cell list and the inter-system neighboring cell list is similar to that in the intra-frequency neighboring cell list. For details, refer to the related descriptions of the intra-frequency neighboring cell list. Details are not described herein again in this application.

Optionally, information about the first-type neighboring cell list is carried in the system information of the serving cell, and the information about the first-type neighboring cell list includes the first-type neighboring cell list.

An NR system is used as an example. Information about the intra-frequency neighboring cell list in the information about the first-type neighboring cell list is carried in an InterFreqCarrierFreqInfo field in a system information block (system information block, SIB) 3 of the system information of the serving cell, and the information about the intra-frequency neighboring cell list includes the intra-frequency neighboring cell list. Information about the inter-frequency neighboring cell list in the information about the first-type neighboring cell list is carried in an InterFreqNeighCellInfo field in a SIB4, and the information about the inter-frequency neighboring cell list includes the inter-frequency neighboring cell list. Information about the inter-system neighboring cell list in the information about the first-type neighboring cell list is carried in a CarrierFreqEUTRA field in a SIBS, and the information about the inter-system neighboring cell list includes the inter-system neighboring cell list.

Two operating modes (such as an enhanced transmission mode (enhanced transmission mode, ET mode) and an energy saving mode (energy saving mode, ES mode)) and the information about the inter-frequency neighboring cell list that is carried in the InterFreqCarrierFreqInfo field in the SIB4 are used as an example. Information about the inter-frequency neighboring cell list in different operating modes may be carried in an interFreqEtModeNeighCellList field and an interFreqEsModeNeighCellList field in the InterFreqCarrierFreqInfo field. The interFreqEtModeNeighCellList field defines information about the inter-frequency neighboring cell list in the ET mode. The interFreqEsModeNeighCellList field defines information about the inter-frequency neighboring cell list in the ES mode. In addition, the InterFreqNeigh-CellInfo field is deleted from the InterFreqCarrierFreqInfo field.

Optionally, when an identifier (identifier, ID) of at least one cell of the first cell is in information about a neighboring cell list in the information about the first-type neighboring cell list, if an operating mode of the at least one cell changes, the information about the first-type neighboring cell list changes accordingly, to obtain updated information about the first-type neighboring cell list. In other words, the terminal device can determine a current operating mode of the at least one cell based on the updated information about the first-type neighboring cell list.

For example, an operating mode of an intra-frequency neighboring cell in the first cell changes from the operating mode #1 to the operating mode #1. In this case, in the information about the first-type neighboring cell list, an intra-frequency neighboring cell list to which the intra-frequency neighboring cell belongs in the operating mode #1 changes to an intra-frequency neighboring cell list in the operating mode #2. In other words, in the updated information about the first-type neighboring cell list, the intra-frequency neighboring cell is in the intra-frequency neighboring cell list in the operating mode #2. Therefore, the terminal device needs to update the system information of the serving cell in a timely manner, to obtain an accurate current operating mode of the first cell.

Optionally, when an ID of at least one cell in the first cell is in information about a plurality of neighboring cell lists in the information about the first-type neighboring cell list, because the terminal device cannot determine a current operating mode of the at least one cell based on the information about the first-type neighboring cell list, the terminal device needs to determine the current operating mode of the at least one cell based on the foregoing two possible implementations.

The foregoing describes the current operating mode of the first cell in the foregoing embodiments. The following describes the first parameter mentioned in the foregoing embodiments.

Optionally, a correspondence between the operating modes and the first parameters is preconfigured. In other words, the plurality of first parameters related to the operating modes are preconfigured. For ease of description, the correspondence between the operating modes and the first parameters is referred to as a third correspondence below. For example, the third correspondence is predefined in a protocol. Alternatively, the third correspondence is preconfigured by the network device and notified to the terminal device.

Optionally, when the third correspondence is configured by the network device and notified to the terminal device, the network device may notify the terminal device of the third correspondence in the following two manners.

In a first possible implementation, the network device notifies the terminal device of the third correspondence by using system information of the serving cell. The system information of the serving cell includes the third correspondence. In other words, the third correspondence is carried in the system information of the serving cell. Because the third correspondence includes the plurality of first parameters, the plurality of first parameters may also be referred to as being carried in the system information of the serving cell.

In a second possible implementation, the network device to which the serving cell belongs notifies the terminal device of the third correspondence by using RRC signaling. The RRC signaling includes the third correspondence. In other words, the third correspondence is carried in the RRC signaling. Because the third correspondence includes the plurality of first parameters, the plurality of first parameters may also be referred to as being carried in the RRC signaling.

For example, a manner of configuring the third correspondence is similar to the manner of configuring the first correspondence. For details, refer to the manner of configuring the first correspondence. Details are not described herein again in this application.

Optionally, the third correspondence is implemented based on the following three examples. In other words, the plurality of first parameters are implemented based on the following three examples.

In an example, the third correspondence (or the plurality of first parameters) may be represented by a table. For example, in two operating modes (the operating mode #1 and the operating mode #2), a first parameter corresponding to the operating mode #1 is a first parameter #1, and a first parameter corresponding to the operating mode #2 is a first parameter #2. The third correspondence may include content shown in Table 4. In this case, the plurality of first parameters include the first parameter #1 and the first parameter #2.

Table 4

| Operating mode | First parameter |
|---|---|
| Operating mode #1 | First parameter #1 |
| Operating mode #2 | First parameter #2 |

In another example, the third correspondence (or the plurality of first parameters) may be represented by a set. For example, in two operating modes (the operating mode #1 and the operating mode #2), a first parameter corresponding to the operating mode #1 is a first parameter #1, and a first parameter corresponding to the operating mode #2 is a first parameter #2. The third correspondence may include the following content: {operating mode #1: first parameter #1} {operating mode #2: first parameter #2}. In this case, the plurality of first parameters are the first parameter #1 and the first parameter #2.

In another example, the third correspondence (or the plurality of first parameters) is represented by a plurality of fields. For example, in two operating modes (the operating mode #1 and the operating mode #2), a field #1 may represent a first parameter corresponding to the operating mode #1, and a field #2 may represent a first parameter corresponding to the operating mode #2. In this case, the plurality of first parameters include the first parameter represented by the field #1 and the first parameter represented by the field #2.

For example, the following describes the plurality of first parameters by using an example in which there are two operating modes (for example, the ET mode and the ES mode), the network device to which the serving cell belongs may configure the third correspondence for cells that are on a same frequency in the first cell, and the third correspondence is carried in the system information of the serving cell.

In a first possible implementation, when the plurality of first parameters include a plurality of first reselection priorities, the plurality of first parameters are carried in a cellReselectionServingFreqInfo field in the system information of the serving cell.

For example, the plurality of first reselection priorities (namely, a cellReselctionEtModePriority field and a cellReselctionEsModePriority field) are defined in the cellReselectionServingFreqInfo field. The cellReselctionEtMode-

Priority field defines a first reselection priority of a cell in the ET mode, and the cellReselctionEsModePriority field defines a first reselection priority of a cell in the ES mode.

In a second possible implementation, when the plurality of first parameters include a plurality of first thresholds, the plurality of first parameters are carried in an intraFreqCellReselectionIno field in the system information of the serving cell.

For example, the plurality of first thresholds (namely, an s-IntraSearchP-Et field, an s-IntraSearchQ-Et field, an s-IntraSearchP-Es field, and an s-IntraSearchQ-Es field) are defined in the intraFreqCellReselectionInfo field. The s-IntraSearchP-Et field defines a first measurement starting threshold in the ET mode, the s-IntraSearchQ-Et field defines a second measurement starting threshold in the ET mode, the s-IntraSearchP-Es field defines a first measurement starting threshold in the ES mode, and the s-IntraSearchQ-Es field defines a second measurement starting threshold in the ES mode.

In a third possible implementation, when the plurality of first parameters include a plurality of second thresholds and a plurality of fifth thresholds, the plurality of first parameters are carried in an InterFreqCarrierFreqInfo field in the system information of the serving cell.

For example, the plurality of second thresholds (a threshX-HighP-Et field, a threshX-HighQ-Et field, a threshX-HighP-Es field, and a threshX-HighQ-Es field) and the plurality of fifth thresholds (a threshX-LowP-Et field, a threshX-LowQ-Et field, a threshX-LowP-Es field, and a threshX-LowQ-Es field) are defined in the InterFreqCarrierFreqInfo field. The threshX-HighP-Et field defines $Thresh_{X,highP}$ in the ET mode, the threshX-HighQ-Et field defines $Thresh_{X,highQ}$ in the ET mode, the threshX-HighP-Es field defines $Thresh_{X,highP}$ in the ES mode, and the threshX-HighQ-Es field defines $Thresh_{X,highQ}$ in the ES mode. The threshX-LowP-Et field defines $Thresh_{X,lowP}$ in the ET mode, the threshX-LowQ-Et field defines $Thresh_{X,lowQ}$ in the ET mode, the threshX-LowP-Es field defines $Thresh_{X,lowP}$ in the ES mode, and the threshX-LowQ-Es field defines $Thresh_{X,lowQ}$ in the ES mode.

Optionally, the plurality of first parameters may alternatively include more items in the plurality of first reselection priorities, the plurality of first thresholds, the plurality of second thresholds, and the plurality of fifth thresholds. In other words, the three possible implementations may be used in combination. Details are not described herein again in this application.

Alternatively, the plurality of first parameters may further include at least one of a plurality of cell reselection priorities related to the operating modes, a plurality of cell reselection sub-priorities related to the operating modes, a plurality of signal quality level parameters, and a plurality of fourth thresholds. An implementation thereof is similar to the foregoing manner of defining the plurality of first reselection priorities, the plurality of first thresholds, and/or the plurality of second thresholds and the plurality of fifth thresholds. For details, refer to the case in which the plurality of first parameters include the plurality of first reselection priorities, the plurality of first thresholds, and/or the plurality of second thresholds and the plurality of fifth thresholds. Details are not described herein again in embodiments of this application.

Optionally, in addition to the foregoing plurality of possible implementations of the plurality of first parameters, when the current operating mode of the first cell is determined by using the information about the neighboring cell list to which the first cell belongs, the plurality of first parameters may be carried in the information about the first-type neighboring cell list.

For example, the terminal device can determine, by using the information about the neighboring cell list to which the first cell belongs, the current operating mode of the first cell and the first reselection priority corresponding to the current operating mode of the first cell. The information about the inter-frequency neighboring cell list in the information about the first-type neighboring cell list is used as an example. The cellReselctionEtModePriority field and the cellReselctionEsModePriority field may be defined in the InterFreqCarrierFreqInfo field. The cellReselctionEtModePriority field defines a first reselection priority of a cell corresponding to a cell identifier (identifier, ID) included in the inter-frequency neighboring cell list in the ET mode, and the cellReselctionEsModePriority field defines a first reselection priority of a cell corresponding to a cell ID included in the inter-frequency neighboring cell list in the ES mode.

A cell corresponding to a cell ID included in the cellReselctionEsModePriority field is used as an example. The terminal device may learn of a current operating mode (namely, the ES mode) of the cell by using the cellReselctionEsModePriority field in which the cell ID of the cell is located, and may further learn of a first reselection priority (namely, a value of the cellReselctionEsModePriority field) of the cell by using the cellReselctionEsModePriority field.

For a case in which the plurality of first parameters include at least one of the plurality of first thresholds, the plurality of second thresholds, the plurality of cell reselection priorities related to the operating modes, the plurality of cell reselection sub-priorities related to the operating modes, the plurality of signal quality level parameters, and the plurality of third thresholds, refer to the case in which the plurality of first parameters include the plurality of first reselection priorities. Details are not described herein again in embodiments of this application.

It should be noted that the foregoing uses two operating modes as an example for description. Actually, this application further supports three or more operating modes. Correspondences between the plurality of operating modes and first parameters, sequences of synchronization signals, and time-frequency resources of the synchronization signals are similar to the correspondences between the operating modes and the first parameters, the sequences of the synchronization signals, and the time-frequency resources of the synchronization signals in the foregoing two operating modes. Details are not described herein again in embodiments of this application.

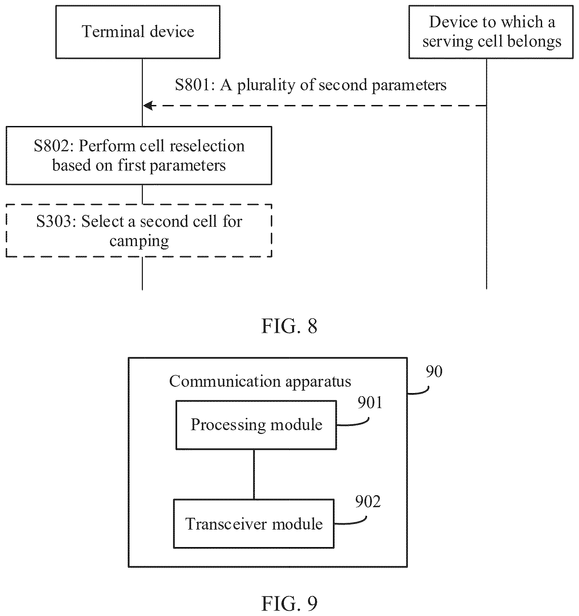

In addition to the foregoing cell reselection method, this application further provides a cell reselection method. As shown in FIG. 8, the cell reselection method includes the following steps.

S801: A network device to which a serving cell belongs sends, to a terminal device, a second parameter corresponding to a current operating mode of a first cell. Correspondingly, the terminal device receives the plurality of second parameters from the network device to which the serving cell belongs. The second parameter corresponding to the current operating mode of the first cell is a second parameter corresponding to a current operating mode of each cell in the first cell.

Optionally, the second parameter is carried in system information of the serving cell. To be specific, the terminal device may obtain, by receiving the system information of the serving cell from the network device to which the serving cell belongs, the second parameter corresponding to the current operating mode of the first cell.

For example, when the current operating mode of the first cell changes, the terminal device is notified through system information update, so that the terminal device receives an updated system information of the serving cell in time, to obtain an accurate second parameter.

Optionally, the second parameter includes a first reselection priority corresponding to the current operating mode of the first cell. Alternatively, the second parameter may include a cell reselection priority that corresponds to the current operating mode of the first cell and that is related to the operating mode, and/or a cell reselection sub-priority that corresponds to the current operating mode of the first cell and that is related to the operating mode.

Optionally, the second parameter includes a first threshold corresponding to the current operating mode of the first cell, a second threshold corresponding to the current operating mode of the first cell, a third threshold corresponding to the current operating mode of the first cell, and a signal quality level corresponding to the current operating mode of the first cell.

For example, for the second parameter, the first reselection priority, the cell reselection priority related to the operating mode, the cell reselection sub-priority related to the operating mode, the first threshold, the second threshold, the third threshold, and the signal quality level, refer to the related descriptions in the cell reselection method shown in FIG. 3. Details are not described herein in this application.

S802: The terminal device performs cell reselection based on the second parameter.

For example, for a process of step S802, refer to the related descriptions of the process in which the terminal device performs cell reselection based on the second parameter in the cell reselection method shown in FIG. 3. Details are not described herein in this application.

Optionally, after step S802, the terminal device may further perform step S303.

It may be understood that in the foregoing embodiments, the methods and/or the steps implemented by the network device may alternatively be implemented by a component (for example, a processor, a chip, a chip system, a circuit, a logical module, or software like a chip or a circuit) that can be used in the network device; and the methods and/or the steps implemented by the terminal device may alternatively be implemented by a component (for example, a processor, a chip, a chip system, a circuit, a logical module, or software like a chip or a circuit) that can be used in the terminal device.

The foregoing mainly describes the solutions provided in this application. Correspondingly, this application further provides a communication apparatus, and the communication apparatus is configured to implement the foregoing methods. The communication apparatus may be the terminal device in the foregoing method embodiments, an apparatus including the foregoing terminal device, or a component that can be used in the terminal device, for example, a chip or a chip system. Alternatively, the communication apparatus may be the network device in the foregoing method embodiments, or an apparatus including the foregoing network device, or a component that can be used in the network device, for example, a chip or a chip system.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, another division manner may be used.

FIG. 9 is a diagram of a structure of a communication apparatus 90. The communication apparatus 90 includes a processing module 901 and a transceiver module 902. The communication apparatus 90 may be configured to implement functions of the foregoing network device or terminal device.

In some embodiments, the communication apparatus 90 may further include a storage module (not shown in FIG. 9), configured to store program instructions and data.

In some embodiments, the transceiver module 902 may also be referred to as a transceiver unit, and is configured to implement a sending function and/or a receiving function. The transceiver module 902 may include a transceiver circuit, a transceiver machine, a transceiver, or a communication interface.

In some embodiments, the transceiver module 902 may include a receiving module and a sending module, respectively configured to perform receiving and sending steps performed by the network device or the terminal device in the foregoing method embodiments, and/or configured to support another process of the technology described in this specification. The processing module 901 may be configured to perform processing (for example, determining or generation) steps performed by the network device or the terminal device in the foregoing method embodiments, and/or configured to support another process of the technology described in this specification.

When the communication apparatus 90 is configured to implement the functions of the terminal device:
in some embodiments, the processing module 901 is configured to obtain, through the transceiver module 902, a plurality of first parameters related to operating modes, where the operating mode is related to a transmission resource of a network device to which a first cell belongs and/or a function supported by the network device, and the first cell includes a serving cell of the terminal device and/or a neighboring cell of the serving cell; and the processing module 901 is configured to perform cell reselection based on the first parameters.

Optionally, the processing module 901 is further configured to: determine, from the plurality of first parameters, a second parameter corresponding to a current operating mode of the first cell; and perform cell reselection based on the second parameter.

Optionally, the processing module 901 is further configured to perform cell reselection based on the first parameters and a cell reselection priority.

Optionally, the processing module 901 is further configured to perform cell reselection based on the first parameters, a cell reselection priority, and a cell reselection sub-priority.

Optionally, the transceiver module 902 is further configured to receive first indication information, where the first indication information indicates the current operating mode of the first cell.

Optionally, the processing module 901 is further configured to select a second cell for camping, where the second cell is a cell in the neighboring cell, and the second cell is a candidate cell for cell reselection.

When the communication apparatus 90 is configured to implement the functions of the network device, the processing module 901 is configured to determine a plurality of first parameters related to operating modes, where the first parameters are used for cell reselection, the operating mode is related to a transmission resource of a network device to which a first cell belongs and/or a function supported by the network device, and the first cell includes a serving cell of the terminal device and/or a neighboring cell of the serving cell; and the transceiver module 902 is configured to send the plurality of first parameters.

Optionally, the transceiver module 902 is further configured to send a correspondence between the operating modes and the first parameters.

Optionally, the transceiver module 902 is further configured to send first indication information, where the first indication information indicates a current operating mode of the first cell.

Optionally, the transceiver module 902 is further configured to send a correspondence between the operating mode and a sequence of a synchronization signal.

All related content of the steps in the foregoing method embodiments may be cited in function descriptions of the corresponding functional modules. Details are not described herein again.

In this application, the communication apparatus 90 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 90 in FIG. 9 is a chip or a chip system, a function/implementation process of the transceiver module 902 may be implemented by an input/output interface (or a communication interface) of the chip or the chip system, and a function/implementation process of the processing module 901 may be implemented by a processor (or a processing circuit) of the chip or the chip system.

The communication apparatus 90 provided in this embodiment may perform the foregoing methods. Therefore, for technical effect that can be achieved by the communication apparatus, refer to the foregoing method embodiments. Details are not described herein again.

In a possible product form, the network device or the terminal device in this embodiment of this application may alternatively be implemented by using one or more field programmable gate arrays (field programmable gate arrays, FPGAs), a programmable logic device (programmable logic device, PLD), a controller, a state machine, a logic gate, a discrete hardware component, any other appropriate circuit, or any combination of circuits that can perform the various functions described in this application.

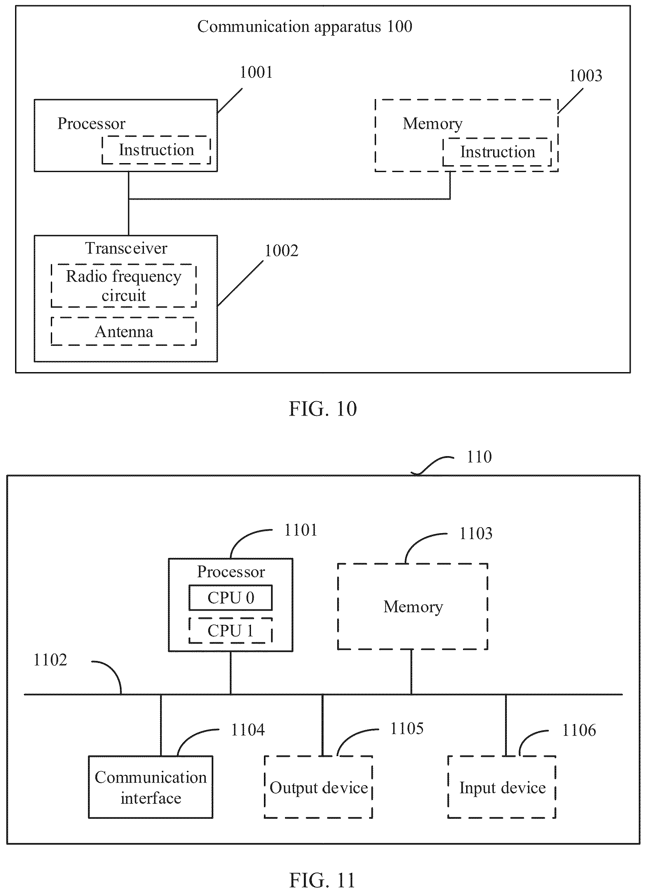

In another possible product form, the network device or the terminal device in this embodiment of this application may be implemented by using a general bus architecture. For ease of description, refer to FIG. 10. FIG. 10 is a diagram of a structure of a communication apparatus 100 according to an embodiment of this application. The communication apparatus 100 includes a processor 1001 and a transceiver 1002. The communication apparatus 100 may be a terminal device, or a chip or a chip system in the terminal device; or the communication apparatus 100 may be a network device, or a chip or a module in the network device. FIG. 10 shows only main components in the communication apparatus 100. In addition to the processor 1001 and the transceiver 1002, the communication apparatus may further include a memory 1003 and an input/output apparatus (not shown in FIG. 10).

Optionally, the processor 1001 is mainly configured to: process a communication protocol and communication data, control the entire communication apparatus, execute a software program, and process data of the software program. The memory 1003 is mainly configured to store the software program and data. The transceiver 1002 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to receive data entered by a user and output data to the user.

Optionally, the processor 1001, the transceiver 1002, and the memory 1003 may be connected through a communication bus.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal in a form of an electromagnetic wave to the outside through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in a hardware implementation, a person skilled in the art may figure out that the communication apparatus 90 may be in a form of the communication apparatus 100 shown in FIG. 10.

In an example, a function/implementation process of the processing module 901 in FIG. 9 may be implemented by the processor 1001 in the communication apparatus 100 shown in FIG. 9 by invoking computer-executable instructions stored in the memory 1003. A function/implementation process of the transceiver module 902 in FIG. 9 may be implemented by the transceiver 1002 in the communication apparatus 100 shown in FIG. 10.

In another possible product form, the network device or the terminal device in this application may use a composition structure shown in FIG. 11, or include components shown in FIG. 11. FIG. 11 is a diagram of composition of a communication apparatus 110 according to this application. The communication apparatus 110 may be a terminal device, or a chip or a system-on-a-chip in the terminal device, or may be a network device, or a module, a chip, or a system-on-a-chip in the network device.

As shown in FIG. 11, the communication apparatus 110 includes at least one processor 1101 and at least one communication interface (an example in which one communication interface 1104 and one processor 1101 are included is merely used for description in FIG. 11). Optionally, the communication apparatus 110 may further include a communication bus 1102 and a memory 1103.

The processor 1101 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1101 may be another apparatus having a processing function, for example, a circuit, a device, or a software module. This is not limited.

The communication bus 1102 is configured to connect different components in the communication apparatus 110, so that the different components can communicate with each other. The communication bus 1102 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The communication interface 1104 is configured to communicate with another device or a communication network. For example, the communication interface 1104 may be a module, a circuit, a transceiver, or any apparatus that can implement communication. Optionally, the communication interface 1104 may alternatively be an input/output interface located in the processor 1101, and is configured to implement a signal input and a signal output of the processor.

The memory 1103 may be an apparatus having a storage function, and is configured to store instructions and/or data. The instructions may be computer programs.

For example, the memory 1103 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 1103 may be independent of the processor 1101, or may be integrated with the processor 1101. The memory 1103 may be located inside the communication apparatus 110, or may be located outside the communication apparatus 110. This is not limited. The processor 1101 may be configured to execute the instructions stored in the memory 1103, to implement the method provided in the following embodiments of this application.

In an optional implementation, the communication apparatus 110 may further include an output device 1105 and an input device 1106. The output device 1105 communicates with the processor 1101, and may display information in a plurality of manners. For example, the output device 1105 may be a liquid crystal display (liquid crystal display, LCD), a light emitting diode (light emitting diode, LED) display device, a cathode ray tube (cathode ray tube, CRT) display device, or a projector (projector). The input device 1106 communicates with the processor 1101, and may receive a user input in a plurality of manners. For example, the input device 1006 may be a mouse, a keyboard, a touchscreen device, or a sensor device.

In some embodiments, in a hardware implementation, a person skilled in the art may figure out that the communication apparatus 90 may be in a form of the communication apparatus 110 shown in FIG. 11.

In an example, a function/implementation process of the processing module 901 in FIG. 9 may be implemented by the processor 1101 in the communication apparatus 110 shown in FIG. 11 by invoking computer-executable instructions stored in the memory 1103. A function/implementation process of the transceiver module 902 in FIG. 9 may be implemented by the communication interface 1104 in the communication apparatus 110 shown in FIG. 11.

It should be noted that the structure shown in FIG. 11 does not constitute a specific limitation on the network device or the terminal device. For example, in some other embodiments of this application, the network device or the terminal device may include more or fewer components than those shown in the figure, or may combine some components, or may split some components, or may have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the memory may not be in the communication apparatus.

In another possible implementation, the communication apparatus further includes an interface circuit. The interface circuit is a code/data read/write interface circuit, and the interface circuit is configured to receive computer-executable instructions (where the computer-executable instructions are stored in the memory, and may be directly read from the memory, or may be read via another component) and send the computer-executable instructions to the processor.

In another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores computer programs or instructions. When the computer programs or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and may be located in one position, or may be distributed on a plurality of network units. Components displayed as units may be or may be not physical units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used for implementation, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A cell reselection method, comprising:

   obtaining a plurality of first parameters related to operating modes, wherein the operating mode is related to a transmission resource of a network device to which a first cell belongs and/or a function supported by the network device, and the first cell comprises a serving cell of a terminal device and/or a neighboring cell of the serving cell; and
   performing cell reselection based on the first parameters.

2. The method according to claim 1, wherein a correspondence between the operating modes and the first parameters is preconfigured.

3. The method according to claim 1 or 2, wherein the performing cell reselection based on the first parameters comprises:

   determining, from the plurality of first parameters, a second parameter corresponding to a current operating mode of the first cell; and
   performing cell reselection based on the second parameter.

4. The method according to any one of claims 1 to 3, wherein the first parameter comprises at least one of the following: a first threshold, a second threshold, a signal quality level parameter, and a third threshold, wherein the first threshold is used to determine whether to start neighboring cell measurement, the second threshold is used for reselection evaluation decision of a high-priority neighboring cell in the neighboring cell, the third threshold is used for reselection evaluation decision of a low-priority neighboring cell in the neighboring cell, and the signal quality level parameter is used for reselection evaluation decision of a same-priority neighboring cell in the neighboring cell.

5. The method according to any one of claims 1 to 4, wherein the first parameter comprises at least one of the following: a cell reselection priority related to the operating mode and a cell reselection sub-priority related to the operating mode.

6. The method according to any one of claims 1 to 4, wherein the first parameter comprises a first reselection priority.

7. The method according to claim 6, wherein the performing cell reselection based on the first parameters comprises: performing cell reselection based on the first parameters and a cell reselection priority.

8. The method according to claim 6, wherein performing cell reselection based on the first parameters comprises: performing cell reselection based on the first parameters, a cell reselection priority, and a cell reselection sub-priority.

9. The method according to any one of claims 1 to 8, wherein the method further comprises: receiving first indication information, wherein the first indication information indicates the current operating mode of the first cell.

10. The method according to claim 9, wherein the first indication information comprises a synchronization signal of the first cell, and the synchronization signal of the first cell is related to the operating mode.

11. The method according to claim 10, wherein a correspondence between the operating mode and a sequence of the synchronization signal is preconfigured.

12. The method according to claim 9, wherein the first indication information comprises information about a neighboring cell list to which the first cell belongs, and the information about the neighboring cell list is related to the operating mode.

13. The method according to claim 12, wherein the neighboring cell list to which the first cell belongs is a neighboring cell list in a first-type neighboring cell list, a list type of the first-type neighboring cell list comprises at least one of an intra-frequency neighboring cell list, an inter-frequency neighboring cell list, or an inter-system neighboring cell, each list type comprises N neighboring cell lists, and N is a quantity of types of the operating modes.

14. The method according to any one of claims 1 to 13, wherein the method further comprises: selecting a second cell for camping, wherein the second cell is a cell in the neighboring cell, and the second cell is a candidate cell for cell reselection.

15. The method according to any one of claims 1 to 14, wherein the first parameters are carried in system information of the serving cell.

16. The method according to claim 15, wherein the system information further comprises at least one of the following: the correspondence between the operating modes and the first parameters, and the correspondence between the operating mode and the sequence of the synchronization signal.

17. The method according to any one of claims 1 to 14, wherein the first parameters are carried in radio resource control RRC signaling.

18. The method according to any one of claims 1 to 17, wherein the operating mode is related to energy consumption of the first cell.

19. A cell reselection method, comprising:

determining a plurality of first parameters related to operating modes, wherein the first parameters are used for cell reselection, the operating mode is related to a transmission resource of a network device to which a first cell belongs and/or a function supported by the network device, and the first cell comprises a serving cell of a terminal device and/or a neighboring cell of the serving cell; and
sending the plurality of first parameters.

20. The method according to claim 19, wherein the method further comprises:
sending a correspondence between the operating modes and the first parameters.

21. The method according to claim 19 or 20, wherein the first parameter comprises at least one of the following: a first threshold, a second threshold, a signal quality level parameter, and a third threshold, wherein the first threshold is used to determine whether to start neighboring cell measurement, the second threshold is used for reselection evaluation decision of a high-priority neighboring cell in the neighboring cell, the third threshold is used for reselection evaluation decision of a low-priority neighboring cell in the neighboring cell, and the signal quality level parameter is used for reselection evaluation decision of a same-priority neighboring cell in the neighboring cell.

22. The method according to any one of claims 19 to 21, wherein the first parameter comprises at least one of the following: a cell reselection priority and a cell reselection sub-priority.

23. The method according to any one of claims 19 to 21, wherein the first parameter comprises a first reselection priority.

24. The method according to any one of claims 19 to 23, wherein the method further comprises:
sending first indication information, wherein the first indication information indicates a current operating mode of the first cell.

25. The method according to claim 24, wherein the first indication information comprises a synchronization signal of the first cell, and the synchronization signal of the first cell is related to the operating mode.

26. The method according to claim 25, wherein the method further comprises:
sending a correspondence between the operating mode and a sequence of the synchronization signal.

27. The method according to claim 24, wherein the first indication information comprises information about a neighboring cell list to which the first cell belongs, and the information about the neighboring cell list is related to the operating mode.

28. The method according to claim 25, wherein the neighboring cell list to which the first cell belongs is a neighboring cell list in a first-type neighboring cell list, a list type of the first-type neighboring cell list comprises at least one of an intra-frequency neighboring cell list, an inter-frequency neighboring cell list, or an inter-system neighboring cell, each list type comprises N neighboring cell lists, and N is a quantity of types of the operating modes.

29. The method according to any one of claims 19 to 28, wherein the first parameters are carried in system information of the serving cell.

30. The method according to claim 29, wherein the system information further comprises at least one of the following: the correspondence between the operating modes and the first parameters, and the correspondence between the operating mode and the sequence of the synchronization signal.

31. The method according to claim 29 or 30, wherein the first parameters are carried in radio resource control RRC signaling.

32. The method according to any one of claims 29 to 31, wherein a sending manner of the system information comprises at least one of the following: broadcast and multicast.

33. The method according to any one of claims 19 to 32, wherein the operating mode is related to energy consumption of the first cell.

34. A communication apparatus, wherein the communication apparatus comprises a transceiver module and a processing module;

> the transceiver module is configured to perform a receiving behavior or a sending behavior in the method according to any one of claims 1 to 18, or the transceiver module is configured to perform a receiving behavior or a sending behavior in the method according to any one of claims 19 to 33; and
> the processing module is configured to perform a processing behavior in the method according to any one of claims 1 to 18, or the transceiver module is configured to perform a processing behavior in the method according to any one of claims 19 to 33.

35. A communication apparatus, wherein the communication apparatus comprises a processor, and the processor is configured to run a computer program or instructions, so that the communication apparatus performs the method according to any one of claims 1 to 18, or the communication apparatus performs the method according to any one of claims 19 to 33.

36. A computer-readable storage medium, wherein the computer-readable storage medium stores computer instructions or a program, and when the computer instructions or the program is run on a computer, the method according to any one of claims 1 to 18 is performed, or the method according to any one of claims 19 to 33 is performed.

37. A computer program product, wherein when the computer program product runs on a communication apparatus, the communication apparatus is caused to perform the method according to any one of claims 1 to 18, or the communication apparatus is caused to perform the method according to any one of claims 19 to 33.

38. A chip, comprising a processor, wherein the processor is coupled to a memory, the memory is configured to store a program or instructions, and when the program or the instructions are executed by the processor, the chip is caused to perform the method according to any one of claims 1 to 18, or the chip is caused to perform the method according to any one of claims 19 to 33.

Start neighboring cell measurement according to a measurement starting criterion — S101

Perform reselection evaluation decision on a neighboring cell based on a cell measurement result, to obtain a candidate cell for cell reselection — S102

Attempt to camp on the candidate cell — S103

FIG. 1

Core network

Network device

Terminal device

FIG. 2

Obtain a plurality of first parameters related to operating modes, where the operating mode is related to a transmission resource of a network device to which a first cell belongs and/or a function supported by the network device, and the first cell includes a serving cell of a terminal device and/or a neighboring cell of the serving cell — S301

Perform cell reselection based on the first parameters — S302

FIG. 3

Terminal device

Device to which a
serving cell belongs

S301: Obtain a plurality of first
parameters related to operating
modes

S304a: First indication information

S302: Perform cell reselection based
on the first parameters

S303: Select a second cell for
camping

FIG. 4

Terminal device

Device to which a
serving cell belongs

S301: Obtain a plurality of first
parameters related to operating
modes

S305a: System information of the serving cell

S302: Perform cell reselection
based on the first parameters

FIG. 5

| Terminal device | | Device to which a serving cell belongs |

S301: Obtain a plurality of first parameters related to operating modes

S305b: RRC signaling

S302: Perform cell reselection based on the first parameters

FIG. 6

| Terminal device | | Device to which a first cell belongs |

S301: Obtain a plurality of first parameters related to operating modes

S304b: First indication information

S302: Perform cell reselection based on the first parameters

S303: Select a second cell for camping

FIG. 7

Terminal device

Device to which a serving cell belongs

S801: A plurality of second parameters

S802: Perform cell reselection based on first parameters

S303: Select a second cell for camping

FIG. 8

Communication apparatus 90

Processing module 901

Transceiver module 902

FIG. 9

FIG. 10

FIG. 11

## INTERNATIONAL SEARCH REPORT

| International application No. |
| --- |
| **PCT/CN2023/098713** |

| **A.** | **CLASSIFICATION OF SUBJECT MATTER** |
| --- | --- |

H04W 36/08(2009.01)i

According to International Patent Classification (IPC) or to both national classification and IPC

| **B.** | **FIELDS SEARCHED** |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; WOTXT; USTXT; EPTXT; CNKI; 3GPP: 小区, 重选, 工作模式, 节能, 功耗, 服务小区, 邻区, 参数, 配置, 优先级, 门限, 阈值, cell, reselect, mode, power, saving, serving cell, neighbor cell, resource, configuration, priority, threshold

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 114026902 A (BEIJING XIAOMI MOBILE SOFTWARE CO., LTD.) 08 February 2022 (2022-02-08)<br>description, paragraphs [0051]-[0180] | 1-38 |
| A | CN 112512068 A (CHINA UNITED NETWORK COMMUNICATIONS GROUP CO., LTD.) 16 March 2021 (2021-03-16)<br>entire document | 1-38 |
| A | CN 113891405 A (HUAWEI TECHNOLOGIES CO., LTD.) 04 January 2022 (2022-01-04)<br>entire document | 1-38 |
| A | CN 115278789 A (HUAWEI TECHNOLOGIES CO., LTD.) 01 November 2022 (2022-11-01)<br>entire document | 1-38 |
| A | CN 116209031 A (HUAWEI TECHNOLOGIES CO., LTD.) 02 June 2023 (2023-06-02)<br>entire document | 1-38 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 February 2024** | **16 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/098713** |

| Patent document cited in search report | | | Publication date (day/month/year) | Patent family member(s) | Publication date (day/month/year) |
| --- | --- | --- | --- | --- | --- |
| CN | 114026902 | A | 08 February 2022 | None | |
| CN | 112512068 | A | 16 March 2021 | None | |
| CN | 113891405 | A | 04 January 2022 | None | |
| CN | 115278789 | A | 01 November 2022 | None | |
| CN | 116209031 | A | 02 June 2023 | None | |

Form PCT/ISA/210 (patent family annex) (July 2022)